# FASCICULE DE BREVET EUROPEEN

(11) **EP 4 419 829 B1**
(45) Date de publication et mention de la délivrance du brevet: **23.07.2025**
(21) Numéro de dépôt: 22786371.9
(22) Date de dépôt: 26.09.2022
(51) Int. Cl.: F17C 3/02

(54) **CUVE ÉTANCHE ET ISOLANTE POUR LE STOCKAGE ET/OU LE TRANSPORT D'UN GAZ LIQUÉFIÉ**
ABGEDICHTETER UND ISOLIERENDER TANK ZUR LAGERUNG UND/ODER ZUM TRANSPORT EINES FLÜSSIGGASES
SEALED AND INSULATING TANK FOR STORING AND/OR TRANSPORTING A LIQUEFIED GAS

(30) Priorité: 19.10.2021 FR 2111112
(43) Date de publication de la demande: 28.08.2024
(73) Titulaire: GAZTRANSPORT ET TECHNIGAZ, 78470 Saint-Rémy-lès-Chevreuse (FR)
(72) Inventeur: DE COMBARIEU, Guillaume, 78470 SAINT-REMY-LES-CHEVREUSE (FR); MOREL, Benoît, 78470 SAINT-REMY-LES-CHEVREUSE (FR); SALMON LEGAGNEUR, Guillaume, 78470 SAINT-REMY-LES-CHEVREUSE (FR)
(74) Mandataire: Loyer & Abello
(86) Numéro de dépôt international: PCT/EP2022/076724
(87) Numéro de publication internationale: WO 2023/066613

(56) Documents cités:
- EP-A1- 3 686 309
- FR-A1- 2 349 099
- JP-A- S52 103 023

## Description

### Domaine technique

L'invention se rapporte au domaine des cuves étanches et thermiquement isolantes. En particulier, l'invention se rapporte au domaine des cuves étanches et thermiquement isolantes pour le stockage et/ou le transport de gaz liquéfié à basse température, telles que des cuves pour le transport pour le transport d'hydrogène liquide, qui est à environ - 253°C à pression atmosphérique mais peut aussi être stocké sous une pression plus élevée. Ces cuves peuvent être installées à poste fixe ou sur tout véhicule terrestre ou flottant.

### Arrière-plan technologique

Il est connu de l'art antérieur une cuve fixe de stockage d'hydrogène liquéfié, selon le *« Boiler and Pressure Vessel Code »* (BPVC) de l'« *American Society of Mechanical Engineers »* (ASME), qui comporte deux coques étanches, rigides et autoporteuses, imbriquées l'une dans l'autre. En raison de la forte épaisseur des deux coques, la fabrication d'une cuve de grande capacité par cette technique présente un coût de matière très élevé et des difficultés de fabrication. En effet, une telle cuve demande une mobilisation humaine importante afin d'une part de la fabriquer et d'autre part de réaliser un contrôle qualité notamment des points de soudure, ce qui augmente fortement le coût de fabrication de la cuve.

On connaît par US-A-4050609 une cuve de stockage pour gaz liquéfié de forme sphérique qui comporte successivement de l'intérieur vers l'extérieur :
un réservoir interne, étanche et autoporteur, le réservoir interne présentant une surface intérieure destinée à être en contact avec le gaz liquéfié et une surface extérieure,
une barrière isolante recouvrant la surface extérieure du réservoir interne, la barrière isolante étant fixée sur le réservoir interne,
une membrane étanche extérieure recouvrant une surface extérieure de la barrière isolante et fixée sur la barrière isolante.

Comme membrane étanche extérieure, US-A-4050609 emploie une feuille d'aluminium collée sur une plaque de contreplaqué d'un bloc isolant, ainsi que des raccords en tissu de fibre de verre. Toutefois, cette membrane étanche extérieure est fragile et susceptible de se déchirer au niveau des raccords en tissu de fibre de verre recouvrant les goujons. Une mise sous vide de la barrière isolante est donc inenvisageable.

Le document JPS52103023A divulgue une cuve étanche et isolante.

### Résumé

Une idée à la base de l'invention est de fournir une cuve étanche et isolante présentant une double barrière d'étanchéité pour confiner le gaz liquéfié et qui soit adaptée à offrir des performances d'isolation thermique élevées pour stocker un produit très froid, par exemple le dihydrogène liquide à pression ambiante. Une autre idée à la base de l'invention est de fournir une cuve étanche et isolante qui puisse être fabriquée à un coût compétitif, y compris avec une très grande capacité.

Pour cela, selon un mode de réalisation, l'invention fournit une cuve étanche et isolante pour le stockage et/ou le transport d'un gaz liquéfié, la cuve comprenant successivement de l'intérieur vers l'extérieur :
un réservoir interne, étanche et autoporteur, le réservoir interne présentant une surface intérieure destinée à être en contact avec le gaz liquéfié et une surface extérieure,
une barrière isolante recouvrant la surface extérieure du réservoir interne, la barrière isolante étant fixée sur le réservoir interne,
une membrane étanche extérieure recouvrant une surface extérieure de la barrière isolante, la membrane étanche extérieure comportant une tôle métallique munie de soufflets ou d'ondulations afin de permettre une déformation élastique, la membrane étanche extérieure étant fixée sur la barrière isolante ou le réservoir interne,
dans laquelle un espace intermédiaire situé entre le réservoir interne et la membrane étanche extérieure contient une phase gazeuse en dépression afin de plaquer la membrane étanche extérieure contre la surface extérieure de la barrière isolante

Grâce à ces caractéristiques, il est possible de créer un vide plus ou moins poussé dans la barrière isolante afin d'accroître la performance d'isolation thermique de la barrière isolante. De plus, la membrane étanche extérieure est configurée avec des soufflets ou ondulations qui permettent d'absorber des variations dimensionnelles par déformation élastique sans risque de déchirer la membrane étanche extérieure. Ces variations dimensionnelles peuvent notamment être occasionnées par la contraction thermique de la cuve lors de la mise en froid par remplissage avec un liquide froid et par la mise sous vide de l'espace intermédiaire contenant la barrière isolante, à savoir par les efforts de compressions générés par la différence entre la pression atmosphérique et la pression régnant dans l'espace intermédiaire.

En outre, du fait que la membrane extérieure recouvre une surface de la barrière isolante, le dimensionnement de la membrane extérieure n'est pas dicté par la résistance à la pression de la cargaison, ni par la pression atmosphérique et ni par la dépression de la phase gazeuse de l'espace intermédiaire. En d'autres termes, une membrane très fine peut être utilisée. De plus, une telle cuve permet de diminuer les efforts de pression vus par le réservoir interne. En effet, les efforts de pression vus par le réservoir interne sont par exemple diminués de 100 kPa par rapport à la situation qui existerait si la pression atmosphérique n'était pas reportée sur la surface extérieure du réservoir interne.

Selon des modes particuliers de réalisation, la cuve étanche et isolante présente l'une ou plusieurs des caractéristiques décrites ci-dessous prise(s) isolément ou selon toute(s) combinaison(s) techniquement possible(s) qui entrent dans le cadre des revendications.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La figure 1 est une vue schématique en coupe représentant une cuve étanche et isolante selon un premier mode de réalisation.
[Fig. 2] La figure 2 est une vue analogue à la figure 1 représentant une cuve étanche et isolante selon un deuxième mode de réalisation.
[Fig. 3] La figure 3 est une vue en perspective d'une plaque métallique ondulée pouvant être utilisée comme membrane étanche extérieure.
[Fig.4] La figure 4 est une vue schématique en coupe représentant un bloc isolant pouvant être utilisé pour réaliser une barrière isolante.
[Fig. 5] La figure 5 est une vue écorchée en perspective d'une paroi de cuve selon un autre mode de réalisation.
[Fig. 6] La figure 6 est une vue analogue à la figure 1 représentant une cuve étanche et isolante munie de pieds de support.
[Fig. 7] La figure 7 est une vue analogue à la figure 1 représentant une cuve étanche et isolante munie de suspentes.
[Fig. 8] La figure 8 est une vue écorchée en perspective d'une paroi de cuve selon un autre mode de réalisation.
[Fig. 9] La figure 9 est une vue analogue à la figure 1 représentant une cuve étanche et isolante munie d'un treillis de raidisseurs internes.
[Fig.10] La figure 10 est une vue schématique en coupe représentant une cuve étanche et isolante selon un autre mode de réalisation.
[Fig.11] La figure 11 est une vue schématique en perspective d'un navire comportant une cuve étanche et isolante en tant que réservoir de carburant.
[Fig. 12] La figure 12 est une vue en coupe d'une paroi de cuve munie d'un pied de support.
[Fig. 13] La figure 13 représente un coupleur mécanique pouvant être utilisé dans la paroi de cuve selon un mode de réalisation.
[Fig. 14] La figure 14 représente une vue en coupe d'une barrière isolante retenue par le coupleur mécanique de la Fig. 13 selon un premier mode de réalisation.
[Fig. 15] La figure 15 est une vue analogue à la Fig. 14 selon un deuxième mode de réalisation.

### Description des modes de réalisation

On va décrire plusieurs modes de réalisation d'une cuve étanche et isolante pour le stockage et/ou le transport d'un gaz liquéfié. Dans les figures, des chiffres de référence identiques désignent des éléments analogues ou identiques.

La cuve étanche et isolante peut présenter différentes formes, par exemple une forme prismatique à facettes planes, comme sur la plupart des figures ci-dessous, ou une forme sphérique, ou encore une forme cylindrique dont la courbe directrice peut être circulaire ou polygonale. Dans le cas d'une cuve de forme cylindrique, les extrémités axiales de la cuve peuvent être fermées par des parois planes ou par des parois hémisphériques. La cuve étanche et isolante peut aussi présenter une forme bilobée, ou une autre forme.

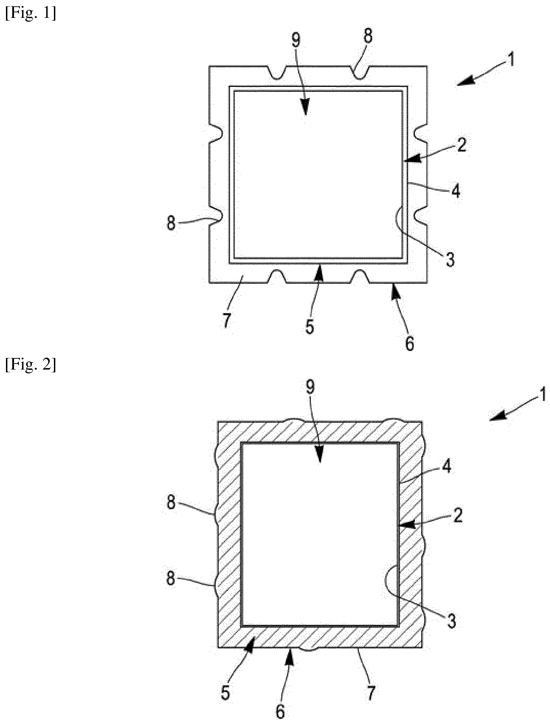

Comme illustré par exemple sur les figures 1 et 2, la cuve 1 comprend successivement de l'intérieur vers l'extérieur :
- un réservoir interne 2, étanche et autoporteur, le réservoir interne 2 présentant une surface intérieure 3 destinée à être en contact avec le gaz liquéfié et une surface extérieure 4,
- une barrière isolante 5 recouvrant la surface extérieure 4 du réservoir interne 2, la barrière isolante 5 étant fixée sur le réservoir interne 2, et
- une membrane étanche extérieure 6 recouvrant une surface extérieure 7 de la barrière isolante 5.

La membrane étanche extérieure 6 comporte une tôle métallique munie de soufflets ou d'ondulations 8 afin de permettre une déformation élastique. La membrane étanche extérieure 6 est fixée sur la barrière isolante 5.

Un espace intermédiaire situé entre le réservoir interne 2 et la membrane étanche extérieure 6 contient, outre la barrière isolante 5, une phase gazeuse en dépression afin de plaquer la membrane étanche extérieure 6 contre la surface extérieure 7 de la barrière isolante 5.

Le réservoir interne 2 est autoporteur et délimite un espace intérieur 9 qui contient directement la cargaison de gaz liquéfié. Pour cela, des techniques similaires aux cuves de type C au sens du code IGC de l'organisation maritime internationale peuvent être utilisées. Toutefois, à la différence d'une cuve de type C, le réservoir interne 2 comporte une seule paroi dans la direction d'épaisseur, et non une paroi double.

Le réservoir interne 2 peut être conçu avec une capacité très différente selon les exigences de l'application visée, par exemple une capacité comprise entre environ 10³ m³ et 10⁵ m³, voire plus.

Selon un mode de réalisation, le réservoir interne peut comporter une coque métallique présentant une épaisseur supérieure à 10 mm, voire supérieure à 20 mm. De préférence cette épaisseur est inférieure à 50 mm.

Le réservoir interne peut être fabriqué à partir de matériaux choisis parmi : les aciers non et faiblement alliés, les aciers inoxydables, les alliages d'acier au Nickel à faible coefficient de dilation thermique, par exemple l'Invar ^{®}, et les alliages d'acier au manganèse à faible coefficient de dilation thermique, l'aluminium.

De préférence le réservoir interne est dimensionné pour supporter une pression intérieure relative supérieure à 200 kPa, voire supérieure à 1000 kPa. Un tel dimensionnement permet de stocker le gaz liquéfié sous pression et donc d'augmenter la durée de stockage sans échappement de vapeur.

Pour cela, selon un mode de réalisation, des raidisseurs internes sont fixés sur la surface intérieure 3 du réservoir interne 2.

Les raidisseurs servent à accroître la tenue à la pression du réservoir interne 2. Ils peuvent être réalisés de différentes manières. Selon un mode de réalisation, les raidisseurs internes comportent des nervures saillantes sur la surface intérieure 3. Selon un mode de réalisation, lorsque la cuve est de forme parallélépipédique, les nervures dans les angles forment une structure en arc de cercle tournée vers l'intérieur du réservoir interne 2.

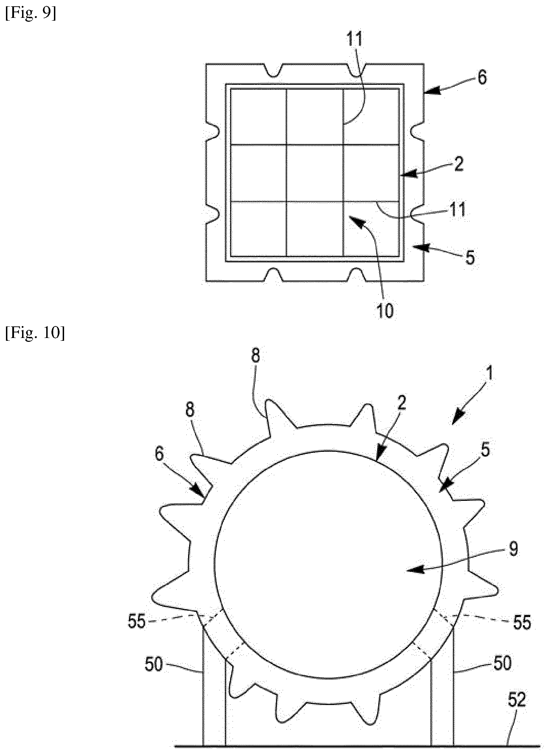

Selon un mode de réalisation, par exemple illustré sur la figure 9, les raidisseurs internes comportent des tiges 11 qui s'étendent entre des côtés opposés de ladite surface intérieure 3 de manière à former une structure en treillis 10.

Des exemples d'une telle structure en treillis 10 sont décrits par exemple dans la publication WO-A-2020021212.

A la différence d'une cuve à double enveloppe rigide citée en introduction, la membrane étanche extérieure 6 n'est pas autoporteuse et comporte une tôle métallique dont l'épaisseur est bien plus faible que le réservoir interne 2. Selon un mode de réalisation, l'épaisseur de la membrane étanche extérieure 6 est inférieure à 2 mm, par exemple égale à 1 ou 1,5 mm.

La membrane étanche extérieure 6 peut être faite de différents métaux. Selon un mode de réalisation, la tôle métallique est en un alliage choisi parmi les aciers non et faiblement alliés, les aciers inoxydables, les alliages d'acier au Nickel à faible coefficient de dilation thermique, et les alliages d'acier au manganèse à faible coefficient de dilation thermique.

En particulier, la tôle métallique peut être réalisée en Invar ^{®}, c'est-à-dire un alliage de fer et de nickel dont le coefficient de dilatation est typiquement compris entre 1,2.10⁻⁶ K⁻¹ et 2.10⁻⁶ K⁻¹ pour un alliage comprenant environ 64 % de fer et 36 % de nickel, ou dans un alliage de fer à forte teneur en manganèse dont le coefficient de dilatation est typiquement de l'ordre de 7 à 9.10⁻⁶ K⁻¹.

La tôle métallique dont est formée la membrane étanche extérieure 6 est munie de soufflets ou d'ondulations 8. Ces soufflets ou ondulations 8 peuvent être saillants vers l'intérieur de la cuve 1 comme sur la figure 1 ou vers l'extérieur de la cuve 1 comme sur la figure 2. Des soufflets ou ondulations allant alternativement dans les deux directions pourraient aussi être employées.

Les soufflets ou ondulations 8 permettent une déformation élastique de la membrane étanche extérieure 6. Ainsi, la membrane étanche extérieure 6 présente une capacité de déformation élastique permettant de suivre les mouvements dus notamment à la contraction thermique du réservoir interne. Selon un mode de réalisation, la membrane étanche extérieure 6 présente une capacité de déformation élastique supérieure à 0,2 %, de préférence comprise entre 0,2 et 1,8 % à température ambiante dans au moins une direction perpendiculaire à l'épaisseur, de préférence dans toute direction perpendiculaire à l'épaisseur. La capacité de déformation de la membrane étanche extérieure 6 est calculée sur la base de la déformation du réservoir interne 2 donc en multipliant le coefficient de dilatation thermique du réservoir interne 2 par la variation de température en service. Par exemple, une capacité de déformation élastique de 0,3 % peut correspondre au coefficient de dilatation de l'acier qui est 11*10⁻⁶mm/mm.K multiplié par 273 K.

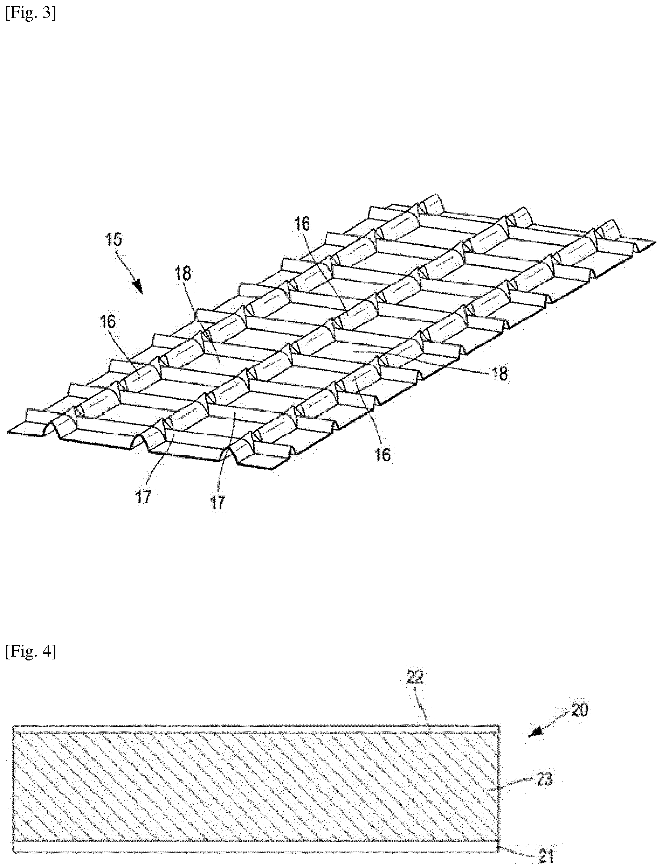

Pour cela, la membrane étanche extérieure 6 peut comporter une série d'ondulations parallèles ou de préférence deux séries d'ondulations parallèles, les deux séries ayant des directions respectives sécantes ou perpendiculaires dans un plan moyen de la tôle métallique. Une plaque de tôle métallique 15 comportant les deux séries d'ondulations est représentée à titre illustratif à la figure 3. La plaque de tôle métallique 15 est par exemple réalisée en acier inoxydable de 1,2 mm d'épaisseur. Les ondulations peuvent être obtenues par pliage.

Selon ce mode de réalisation, la membrane étanche extérieure 6 est ondulée et comporte une première série d'ondulations parallèles 16 et des portions planes 18 situées entre les ondulations parallèles et reposant sur la barrière isolante 5, les ondulations parallèles 16 étant agencées parallèlement à une première direction.

Selon des modes de réalisation, les ondulations de la première et/ou seconde série d'ondulations peuvent être continues ou discontinues.

Selon ce mode de réalisation, la membrane étanche extérieure 6 comporte en outre une deuxième série d'ondulations parallèles 17 et des portions planes 18 situées entre les ondulations parallèles 17 et reposant sur la barrière isolante 5, les ondulations parallèles 17 étant agencées perpendiculairement à la première direction.

La membrane étanche extérieure 6 peut être réalisée sur toute l'étendue nécessaire en assemblant de manière étanche, par soudure avec recouvrement, une pluralité des plaques de tôle métallique 15. On obtient ainsi des ondulations qui s'étendent de manière continue d'une plaque de tôle à la suivante sur toute la surface recouverte par la membrane étanche extérieure 6.

Alternativement, des ondulations peuvent être formées de manière discontinue, par exemple par emboutissage. Des exemples d'une membrane métallique avec des ondulations discontinues sont par exemple disponibles dans la publication JPS55139597.

Par ailleurs, la plaque de tôle métallique 15 est globalement plane et convient pour une face plane d'une cuve polyédrique. Il est bien entendu que la tôle métallique peut être courbée selon un ou plusieurs rayons de courbure selon la géométrie de la paroi de cuve à recouvrir, qui peut être par exemple sphérique ou cylindrique. Les ondulations 16 et/ou 17 peuvent donc suivre des lignes directrices courbes.

Selon un mode de réalisation, la membrane étanche extérieure 6 présente une forme générale sphérique et la première direction, correspondant par exemple aux ondulations parallèles 17, est une direction méridienne. Selon un mode de réalisation, la membrane étanche extérieure 6 présente une forme générale cylindrique et la première direction, correspondant par exemple aux ondulations parallèles 17, est une direction axiale. Selon un mode de réalisation, la membrane étanche extérieure 6 présente une forme générale prismatique ou parallélépipédique et la première direction, correspondant par exemple aux ondulations parallèles 17, est une direction longitudinale.

Il sera présenté ci-après des modes de réalisation de la barrière isolante 5. La barrière isolante 5 est fixée sur le réservoir interne 2 et la membrane étanche extérieure 6 est fixée sur la barrière isolante 5. La barrière isolante 5 est dimensionnée pour tenir au vide avec un certain degré de déformation, qui ne doit pas dépasser la capacité d'élongation élastique de la membrane étanche extérieure 6. La barrière isolante 5 recouvre de préférence l'ensemble de la surface extérieure 4 du réservoir interne 2.

Différentes structures et différents matériaux peuvent être utilisés pour cela. Selon des modes de réalisation, la barrière isolante 5 comprend un matériau choisi parmi : les mousses de polymères, par exemple mousses de polyuréthane, de polyvinyle, de polypropylène ou de polyéthylène, renforcées ou non de fibres, la mousse de mélamine (également appelée mousse BASOTECT) ; les laines minérales, les ouates de polyester ou cellulose, par exemple laine de verre, laine de roche, les perlites, les silices pyrogénées, les silices compactées et les aérogels.

Selon un mode de réalisation, la barrière isolante 5 est constituée d'un matériau choisi parmi les laines minérales, les ouates de polyester et les ouates de cellulose. Par exemple ces matériaux présentent une épaisseur comprise entre 200 et 400 mm, de préférence entre 200 et 300 mm.

De tels matériaux isolants peuvent être déposés directement sur la surface extérieure 4 du réservoir interne 2 sans conditionnement préalable. Par exemple, la laine de verre ou l'ouate de polyester ou l'ouate de cellulose peut être déposée directement sur la surface extérieure 4 du réservoir interne 2, par exemple sous la forme de bandes parallèles. Selon un autre exemple, la mousse de polymère pourrait être polymérisée directement in situ sur toute la surface extérieure 4 du réservoir interne 2.

Selon un mode de réalisation, les bandes de laine de verre ou d'ouate sont liées entre elles par couture, par exemple avec des fils de verre, de composite ou de plastique.

Selon un mode de réalisation, la barrière isolante 5 est pré-comprimée dans le sens de l'épaisseur entre le réservoir interne 2 et la membrane étanche extérieure 6. Cette pré-compression peut être appliquée par des coupleurs mécaniques décrits plus bas.

Notamment lorsque la barrière isolante 5 est constitué de matériaux compressibles comme les laines minérales, les ouates de polyester et les ouate de cellulose, la contrainte de pré-compression permet de mieux soutenir la membrane étanche extérieure 6. Elle est par exemple comprise entre 0,1 MPa et 0,2 MPa.

Par pré-compression, on entend une contrainte qui existe avant la mise en dépression de l'espace intermédiaire, laquelle peut ajouter une compression additionnelle de la barrière isolante 5 via la membrane étanche extérieure 6.

Une fabrication modulaire de la barrière isolante 5 peut faciliter la standardisation des méthodes de pose de l'isolation.

Selon des modes de réalisation, la barrière isolante 5 comprend des éléments calorifuges juxtaposés sur la surface extérieure 4 du réservoir interne 2.

Dans un mode de réalisation, illustré par exemple à la figure 4, un élément calorifuge 20 comporte :
une première plaque 21 adjacente à la surface extérieure 4 du réservoir interne 2,
une deuxième plaque 22 parallèle à la première plaque 21 et espacée de la première plaque 21 dans une direction d'épaisseur de l'élément calorifuge 20, la deuxième plaque 22 étant adjacente à la membrane étanche extérieure 6 et
une garniture isolation thermique 23 disposée entre la première plaque et la deuxième plaque.

Cette garniture d'isolation thermique comporte par exemple une mousse de polymère ayant une densité suffisante pour tenir le petit effort de compression lié à la différence de pression entre l'atmosphère ambiante et l'espace intermédiaire et tenir compte d'une marge de sécurité. Selon un mode de réalisation, la densité est comprise entre 40 kg/m³ et 90kg/m³, préférentiellement comprise entre 40 kg/m³ et 70 kg/m³, par exemple égale à 50 kg/m³. Il peut s'agir par exemple d'une mousse de polyuréthane, de polyvinyle, ou de polyéthylène ou polypropylène, renforcée ou non de fibres de verre.

Les plaques 21 et 22 peuvent être réalisées en bois contreplaqué ou en matière composite. Elles peuvent être collées à la garniture isolation thermique 23.

Les éléments calorifuges juxtaposés les uns aux autres peuvent présenter des espaces inter-panneaux. Il est alors nécessaire d'insérer des joints dans les espaces inter-panneaux afin d'assurer la continuité de la barrière isolante. Les joints sont par exemple composés de laine de verre. Autrement dit, dans la cuve selon l'invention, la barrière isolante 5 peut présenter une continuité de matière. La continuité de matière est assurée par des matériaux isolants, de type garniture d'isolation thermique. Le moindre espace est comblé si bien qu'aucun espace n'est présent dans cette barrière. La barrière isolante 5 est ainsi continue dans toutes les directions, c'est-à-dire dans la direction d'épaisseur de la cuve et perpendiculairement à cette direction. Cette continuité, dans des directions perpendiculaire et parallèle à la surface de la cuve, est au moins présente sur une couche de l'isolation.

Dans un mode de réalisation, un élément calorifuge inclut une garniture d'isolation thermique, par exemple faite dans les matériaux précités, disposée sous la forme d'une couche parallèle à la surface extérieure du réservoir interne. La garniture d'isolation est par exemple de la perlite, des aérogels de silices ou leurs mélanges.

Dans un mode de réalisation, des éléments porteurs s'élèvent à travers l'épaisseur de ladite garniture d'isolation thermique pour reprendre des efforts. Dans un exemple applicable à l'élément calorifuge 20 illustré à la figure 4, les éléments porteurs sont disposés entre la première plaque 21 et la deuxième plaque 22, et
la garniture d'isolation thermique 23 est disposée entre les éléments porteurs. Lorsqu'ils sont présents, la densité de la garniture d'isolation thermique 23 peut être diminuée puisque les éléments porteurs reprennent les efforts au moins en partie.

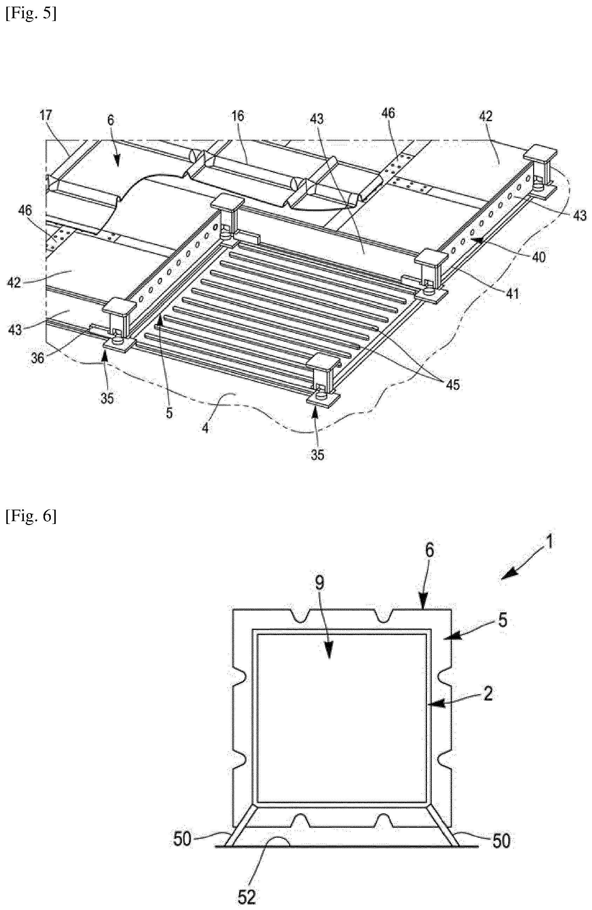

Dans un autre mode de réalisation, par exemple illustré à la figure 5, l'élément calorifuge est réalisé sous la forme d'une boite 40 comprenant la première plaque 41, la deuxième plaque 42 et des plaques latérales 43 s'étendant entre la première plaque 41 et la deuxième plaque 42 pour enfermer un espace intérieur de la boite 40. L'espace intérieur de la boite 40 est remplie de ladite garniture d'isolation thermique.

Puisque la boite 40 reprend les efforts de compression, la garniture d'isolation thermique (non représentée) peut être n'importe quelle matière non structurelle, par exemple une poudre telle que la perlite, de la laine de verre ou autre.

Selon un mode de réalisation, les éléments porteurs comportent des cloisons porteuses segmentant ledit espace intérieur en une pluralité de compartiments remplis de la garniture d'isolation thermique et maintenant la première plaque 41 à distance de la deuxième plaque 42.

D'autres détails sur la fabrication d'une telle barrière isolante peuvent être trouvés dans la publication WO-A-2017064426.

Les éléments rigides de la barrière isolante 5, comme les boîtes 40, les éléments porteurs ou les plaques 21 et 22 peuvent être réalisées en bois contreplaqué ou en matière composite.

Selon un mode de réalisation, l'épaisseur de la barrière isolante est supérieure à 200 mm, préférentiellement comprise entre 200 mm et 800 mm.

Différentes solutions sont possibles pour la fixation de la barrière isolante sur le réservoir interne.

Selon un mode de réalisation la barrière isolante 5 est fixée sur la surface extérieure 4 du réservoir interne 2 par collage, préférentiellement via des cordons de mastic.

Des cordons de mastic 45 pouvant servir à coller la boite 40 à la surface extérieure 4 sont par exemple représentés à la figure 5. De tels cordons de mastic permettent aussi de rattraper d'éventuels défauts de planéité de la surface extérieure 4.

Selon un autre mode de réalisation, la surface extérieure 4 du réservoir interne 2 porte une pluralité de coupleurs mécaniques, et la barrière isolante 5 est fixée sur la surface extérieure 4 du réservoir interne 2 par lesdits coupleurs mécaniques.

De tels coupleurs mécaniques sont en particulier utilisables avec des éléments calorifuges juxtaposés. Ainsi, la figure 5 illustre des coupleurs mécaniques 35 disposés aux niveaux des coins des éléments calorifuges 40 et respectivement des boites 40. Un tel coupleur mécanique peut retenir l'élément calorifuge par l'une ou l'autre zone de celui-ci, par exemple au niveau d'une plaque de fond ou d'une plaque de couvercle. Ainsi, sur la figure 5 le coupleur mécanique 35 coopère avec un tasseau 36 en appui sur la plaque 41. D'autres coupleurs mécaniques peuvent être utilisés, par exemple les coupleurs décrits dans FR-A-2798902.

Comme visible par exemple sur la figure 5, des coupleurs mécaniques peuvent être utilisés en combinaison avec un collage de la barrière isolante 5. On peut aussi noter que, dès lors que des coupleurs mécaniques sont utilisés, le collage n'est pas indispensable. Des cordons de mastic 45 peuvent être utilisé afin de rattraper les défauts de planéité de la surface extérieure 4.

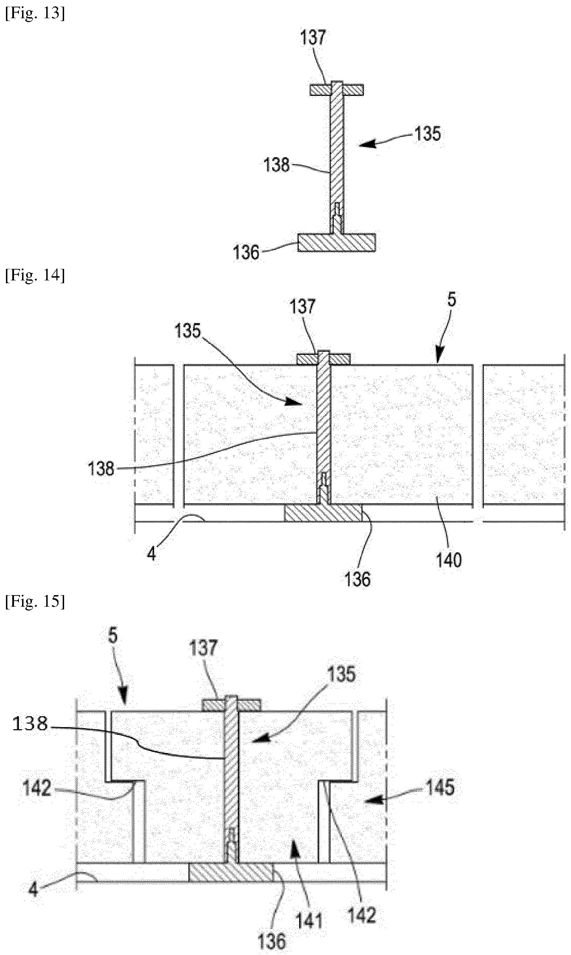

Un coupleur mécanique 135 selon un autre mode de réalisation est représenté sur les figures 13 à 15. Le coupleur mécanique 135 comprend une tige 138 traversant la barrière isolante 5 dans le sens de l'épaisseur de la barrière isolante et une pièce d'extrémité 137 qui est fixée à une extrémité de la tige 138 opposée au réservoir interne et qui prend appui sur une surface extérieure de la barrière isolante 5. Avantageusement, la membrane étanche extérieure 6 est attachée à la pièce d'extrémité 137.

Plus précisément, le coupleur mécanique 135 comprend une tige 138, et une première pièce d'extrémité 136 et une deuxième pièce d'extrémité 137 agencées aux deux bouts de la tige 138. La fixation de la tige 138 aux première et deuxième pièces d'extrémité 136, 137 est par exemple réalisée par vissage ou par clipsage.

Le coupleur mécanique est par exemple fabriqué à partir d'un matériau métallique. Pour limiter la conduction thermique, il est préférable d'utiliser un matériau non métallique, par exemple un matériau composite, notamment pour la tige 138.

La première pièce d'extrémité 136 est fixée sur la surface extérieure 4 du réservoir interne 2 et porte la tige 138. Par exemple, la première pièce d'extrémité 136 est métallique et fixée par soudage.

La deuxième pièce d'extrémité 137 est fixée à l'autre extrémité de la tige 138 et présente une section plus large que la tige 138 pour prendre appui sur la barrière isolante 5. Ainsi, le coupleur mécanique 135 peut exercer une pression sur la barrière isolante 5 par l'intermédiaire de la deuxième pièce d'extrémité 137, qui comprend par exemple une plaque ou une rondelle. La deuxième pièce d'extrémité 137 est par exemple réalisée en matériau composite ou plastique.

Selon un autre mode de réalisation, la deuxième pièce d'extrémité 137 est métallique, ce qui permet en outre d'y souder la membrane étanche extérieure 6. Ainsi, le coupleur mécanique 135 peut servir à retenir à la fois la barrière isolante 5 et la membrane étanche extérieure 6.

La figure 14 illustre la coopération du coupleur mécanique 135 avec la barrière isolante 5. Dans ce mode de réalisation, le coupleur mécanique 135 traverse un élément calorifuge 140 de la barrière isolante 5, qui est par exemple un bloc de mousse isolante ou une bande de laine de verre ou de ouate de polyester.

La figure 15 illustre la coopération du coupleur mécanique 135 avec la barrière isolante 5 dans un deuxième mode de réalisation. Ici, le coupleur mécanique 135 traverse un élément calorifuge 141 situé entre deux éléments calorifuges 145. L'élément calorifuge 141 présente sur chaque portion latérale un épaulement 142 appuyant sur une saillie correspondante des éléments calorifuges 145 adjacents afin de plaquer les éléments calorifuges 145 adjacents contre la surface extérieure 4 du réservoir interne 2.

Il va de soi que le coupleur mécanique 135 est présent en de multiples exemplaires disposés de manière appropriée pour retenir toute la barrière isolante 5 sur le réservoir interne 2, par exemple sous la forme de rangées parallèles de coupleurs ou sous la forme d'un réseau à maille carrée ou rectangulaire ou autre. Selon un mode de réalisation, les coupleurs mécaniques sont espacés entre eux d'un pas compris entre 0,5 m et 2 m. Les coupleurs mécaniques peuvent servir ou non à retenir la membrane étanche externe 6. Dans un mode de réalisation, certains des coupleurs mécaniques remplissent cette fonction et d'autres non.

Différentes possibilités existent pour retenir la membrane étanche externe 6 sur la barrière isolante 5.

Selon un mode de réalisation, un dit élément calorifuge porte, sur une face externe opposée au réservoir interne, au moins une pièce métallique destinée à fixer la membrane étanche externe sur la barrière isolante, par soudure sur ladite pièce métallique.

Ce mode de réalisation est illustré par exemple sur la figure 5 où des bandes d'ancrage métalliques 46 sont fixées sur la plaque de couvercle 42 des boites 40.

Selon une variante non représentée, l'ancrage de la membrane étanche externe 6 est réalisé à l'aide de plots en mousse isolante ayant une première extrémité fixée sur la surface extérieure 4 du réservoir interne 2. Le plot en mousse isolante comprend une plaque métallique sur une deuxième extrémité, opposée à la première extrémité, la plaque métallique étant destinée à fixer la membrane étanche externe 6. Par exemple, des tiges filetées saillantes sont soudées sur la surface extérieure 4 du réservoir interne 2 et les plots en mousse isolante sont fixés sur les tiges filetées, par exemple par vissage dans un trou taraudé de forme complémentaire.

Comme indiqué, la barrière isolante 5 est située dans un espace intermédiaire qui est enfermé de manière étanche entre le réservoir interne 2 et la membrane étanche extérieure 6 et qui contient une phase gazeuse en dépression. Cette dépression, autrement dit un vide partiel, permet d'abaisser le transfert thermique dans la barrière isolante 5 et d'augmenter la performance d'isolation thermique.

Selon un mode de réalisation, la phase gazeuse en dépression présente une pression absolue inférieure à 1kPa (10 mbar), de préférence 0,1 kPa (1 mbar) à une température de 15 °C.

La dépression de la phase gazeuse peut par exemple amener la membrane étanche extérieure 6 à exercer une compression additionnelle d'environ 0,1MPa sur la barrière isolante 5.

Compte tenu de sa faible épaisseur, la membrane étanche extérieure 6 ne devrait pas servir à supporter ou suspendre la cuve 1.

Ainsi, selon un mode de réalisation, la cuve 1 comprend un système de support destiné à supporter la cuve dans une installation, le système de support comprenant au moins un élément de support présentant une portion interne fixée au réservoir interne 2 et une portion externe s'étendant à l'extérieur de la membrane étanche extérieure 6, ledit élément de support s'étendant à travers une épaisseur de la barrière isolante 5 et traversant de manière étanche la membrane étanche extérieure 6.

Selon un mode de réalisation, illustré par exemple à la figure 6, un dit élément de support 50 est fixé à une portion inférieure du réservoir interne 2, et la cuve 1 est portée par ledit élément de support 50. Ainsi l'installation est par exemple une paroi de sol 52 au-dessus de laquelle la cuve 1 est supportée par l'intermédiaire d'un ou plusieurs éléments de support 50.

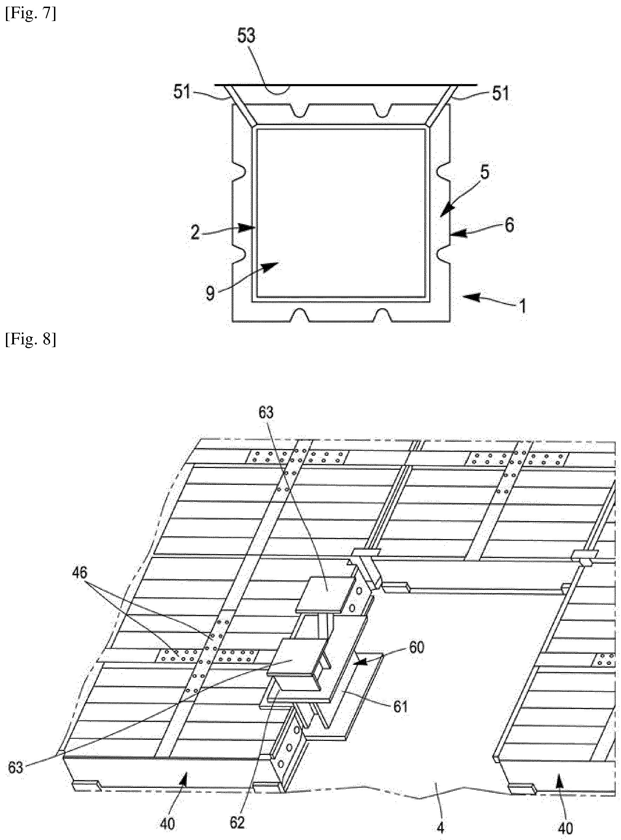

Selon un mode de réalisation, illustré par exemple à la figure 7, un dit élément de support 51 est fixé à une portion supérieure du réservoir interne 2, et la cuve 1 est suspendue par ledit élément de support 51. Ainsi l'installation est par exemple une paroi de plafond 53 sous laquelle la cuve 1 est suspendue par l'intermédiaire d'un ou plusieurs éléments de support 51.

Hormis les positions illustrées aux figures 6 et 7, des éléments de support similaires peuvent être situés à tout emplacement approprié sur le réservoir interne 2. Ainsi, la cuve 1 pourrait aussi être fixée à des murs verticaux par des supports s'étendant horizontalement à partir d'un ou plusieurs côtés latéraux du réservoir interne 2.

La figure 8 illustre un mode de réalisation d'un pied de support 60 pouvant servir pour réaliser l'élément de support 50 ou 51. Le pied de support 60 comporte une embase 61 fixée, par exemple soudée, à la surface extérieure 4 entre les éléments calorifuges réalisant la barrière isolante 5, qui sont ici des boites 40. L'embase 61 se développe à travers l'épaisseur de la barrière isolante 5 depuis la surface extérieure 4 jusqu'à la hauteur de la membrane étanche externe 6. L'embase 61 porte une plaque métallique d'étanchéité 62, qui permet de souder de manière étanche tout le contour d'une ouverture pratiquée dans la membrane étanche extérieure 6 (non représentée). Selon une variante l'embase 61 est formée en un matériau isolant capable de supporter la plaque métallique d'étanchéité 62, par exemple en bois ou en composite en fibre de verre. Ce mode de réalisation est avantageux en ce qu'il permet de diminuer les ponts thermiques pouvant diminuer la qualité de l'isolation thermique.

La plaque métallique d'étanchéité 62 porte un ou plusieurs pieds 63 faisant saillie au-delà de la membrane étanche extérieure 6 et permettant de coopérer avec la paroi de sol 52 ou paroi de plafond 53, selon l'emplacement du pied de support 60 sur le réservoir interne 2. D'autres détails sur la fabrication d'un tel pied de support peuvent être trouvés dans la publication WO-A-2017174938.

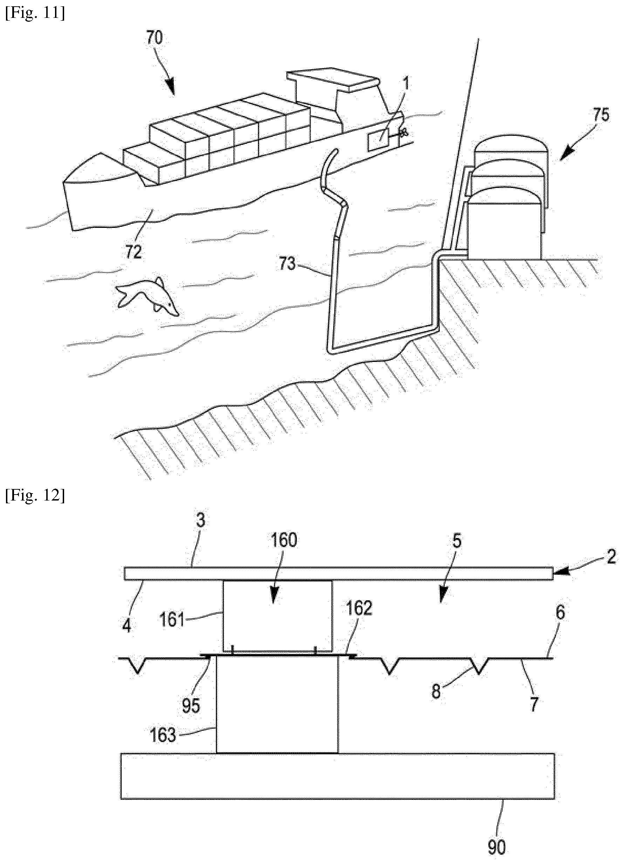

La figure 12 illustre un autre mode de réalisation d'un système de support. Le système de support est un pied de support 160 comprenant une première partie 161 interne et une deuxième partie 163 externe, et une plaque métallique d'étanchéité 162 agencée entre elles. La première partie 161 interne est située entre la surface extérieure 4 du réservoir interne 2 et la surface intérieure de la membrane étanche 6. La deuxième partie 163 externe s'étend depuis la surface extérieure 7 de la membrane isolante 6 jusqu'à un support externe 90, par exemple un sol. La première partie 161 est par exemple une cale en bois ou en fibre de verre fixée sur le réservoir interne 2 et qui s'étend jusqu'à la membrane étanche extérieure 6. Le réservoir interne 2 repose sur la première partie 163. Ainsi, cette première partie permet notamment de limiter les ponts thermiques à travers la barrière isolante 5. La deuxième partie 163 est un support par exemple en métal positionné en vis-à-vis de la première partie. Ainsi, le pied de support 160 permet de supporter le poids ou une partie du poids de la cuve sans écraser ou déformer l'isolant de la barrière isolante 5. Le nombre de pieds de support ainsi que les dimensions de la première partie 161 et de la deuxième partie 163 seront choisis au regard de la forme et du poids de la cuve. Lorsqu'une pluralité de pieds de supports 160 sont nécessaires, ils peuvent présenter des dimensions identiques ou différentes entre eux. De façon non représenté, une pièce métallique peut être interposée entre la pièce 161 et la coque 2 permettant de mieux supporter le poids de la coque 2.

Le figure 12 illustre aussi des zones de soudure 95 pour raccorder la membrane étanche extérieure 6 à la plaque métallique d'étanchéité 162.

Comme il a été indiqué, la cuve 1 peut présenter diverses formes. Une cuve de forme sphérique est représentée schématiquement sur la figure 10. La portion 55 des éléments de support 50 a été représentée en traits interrompus pour clarifier qu'ils traversent l'épaisseur de la barrière isolante 5, comme déjà décrit.

Une telle cuve peut servir à stocker différents gaz liquéfiés, par exemple du gaz naturel liquéfié, du gaz de pétrole liquéfié, de l'ammoniac. De préférence, la cuve étanche et isolante destinée à contenir du dihydrogène.

Une telle cuve peut faire partie d'une installation de stockage terrestre, par exemple pour stocker de l'hydrogène ou du GNL ou être installée dans une structure flottante, côtière ou en eau profonde, notamment un navire méthanier, une unité flottante de stockage et de regazéification (FSRU), une unité flottante de production et de stockage déporté (FPSO) et autres. Selon un mode de réalisation, l'installation de stockage terrestre est destinée à alimenter en gaz un dispositif de production d'énergie électrique ou thermique afin par exemple d'alimenter une ville en électricité ou en chaleur, ou un réseau afin par exemple d'alimenter une ville en gaz naturel.

En particulier, dans un véhicule terrestre, aérien ou marin, comportant un dispositif de propulsion ou de production d'énergie, la cuve étanche et isolante 1 peut servir en tant que réservoir de carburant pour le dispositif de propulsion ou de production d'énergie, comme illustré à la figure 11 en référence à un navire 70.

Dans un mode de réalisation, un système de transfert pour un gaz liquéfié combustible comporte le véhicule précité, des canalisations isolées agencées de manière à relier le réservoir de carburant du véhicule à une installation de stockage flottante ou terrestre et une pompe pour entrainer un flux de gaz liquéfié combustible à travers les canalisations isolées depuis l'installation de stockage flottante ou terrestre vers le réservoir de carburant.

Dans un procédé de chargement d'un véhicule précité, on achemine un gaz liquéfié combustible à travers des canalisations isolées depuis une installation de stockage flottante ou terrestre vers le réservoir de carburant du véhicule

Par exemple, en référence à la figure 11, le navire 70 comporte la cuve étanche et isolante 1, par exemple de forme générale prismatique, montée dans la coque 72 du navire.

De manière connue en soi, des canalisations de chargement/déchargement disposées sur le pont supérieur du navire peuvent être raccordées, au moyen de lignes de transfert 73, à un terminal portuaire 75 pour transférer une cargaison de gaz liquéfié combustible vers la cuve 1.

Pour engendrer la pression nécessaire au transfert du gaz liquéfié, on met en œuvre des pompes embarquées dans le navire 70 et/ou des pompes équipant le terminal portuaire 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Cuve étanche et isolante (1) pour le stockage et/ou le transport d'un gaz liquéfié, la cuve comprenant successivement de l'intérieur vers l'extérieur :
un réservoir interne (2), étanche et autoporteur, le réservoir interne présentant une surface intérieure destinée à être en contact avec le gaz liquéfié et une surface extérieure,
une barrière isolante (5) recouvrant la surface extérieure du réservoir interne, la barrière isolante étant fixée sur le réservoir interne,
une membrane étanche extérieure (6) recouvrant une surface extérieure de la barrière isolante, la membrane étanche extérieure comportant une tôle métallique,
la membrane étanche extérieure étant fixée sur la barrière isolante ou le réservoir interne,
**caractérisée en ce que** la membrane étanche extérieure est
munie de soufflets ou d'ondulations (8) afin de permettre une déformation élastique, dans laquelle un espace intermédiaire situé entre le réservoir interne et la membrane étanche extérieure contient une phase gazeuse en dépression afin de plaquer la membrane étanche extérieure (6) contre la surface extérieure de la barrière isolante (5), dans laquelle la dépression consiste en une différence entre la pression régnant dans l'espace intermédiaire et la pression atmosphérique.

2. Cuve étanche et isolante selon la revendication 1, dans laquelle le réservoir interne (2) comporte une coque métallique présentant une épaisseur supérieure à 10 mm.

3. Cuve étanche et isolante selon la revendication 1 ou 2, dans laquelle le réservoir interne (2) est fabriqué à partir de matériaux choisis parmi : les aciers non et faiblement alliés, les aciers inoxydables, les alliages d'acier au Nickel à faible coefficient de dilation thermique, et les alliages d'acier au manganèse à faible coefficient de dilation thermique, l'aluminium.

4. Cuve étanche et isolante selon l'une des revendications 1 à 3, dans laquelle des raidisseurs internes (11) sont fixés sur la surface intérieure du réservoir interne.

5. Cuve étanche et isolante selon la revendication 4, dans laquelle les raidisseurs internes (11) comportent des nervures saillantes sur la surface intérieure (3).

6. Cuve étanche et isolante selon l'une des revendications 1 à 5, dans laquelle le réservoir interne (2) est dimensionné pour supporter une pression intérieure relative supérieure à 200 kPa.

7. Cuve étanche et isolante selon l'une des revendications 1 à 6, la cuve comprenant en outre un système de support (50, 51, 60, 160) destiné à supporter la cuve dans une installation (52, 53), le système de support comprenant au moins un élément de support (60) présentant une portion interne (61,161) fixée au réservoir interne et une portion externe (63, 163) s'étendant à l'extérieur de la membrane étanche extérieure (6), ledit élément de support (60) s'étendant à travers une épaisseur de la barrière isolante (5) et traversant de manière étanche la membrane étanche extérieure (6).

8. Cuve étanche et isolante selon la revendication 7, dans laquelle un dit élément de support (50) est fixé à une portion inférieure du réservoir interne, et dans laquelle la cuve est portée par ledit élément de support.

9. Cuve étanche et isolante selon la revendication 7, dans laquelle un dit élément de support (51) est fixé à une portion supérieure du réservoir interne, et dans laquelle la cuve est suspendue par ledit élément de support.

10. Cuve étanche et isolante selon l'une des revendications 1 à 9, dans laquelle la barrière isolante (5) comprend un matériau choisi parmi : les mousses de polymères, les laines minérales, les ouates de polyester ou de cellulose, les perlites, les silices pyrogénées, les silices compactées et les aérogels.

11. Cuve étanche et isolante selon l'une des revendications 1 à 10, dans laquelle la barrière isolante (5) est constitué d'un matériau choisi parmi les laines minérales, les ouates de polyester et les ouates de cellulose.

12. Cuve étanche et isolante selon l'une des revendications 1 à 11, dans laquelle la barrière isolante (5) est pré-comprimée dans le sens de l'épaisseur entre le réservoir interne (2) et la membrane étanche extérieure (6).

13. Cuve étanche et isolante selon l'une des revendications 1 à 12, dans laquelle la barrière isolante comprend des éléments calorifuges (20, 40) juxtaposés sur la surface extérieure du réservoir interne.

14. Cuve étanche et isolante selon la revendication 13, dans laquelle un élément calorifuge (40) inclut une garniture d'isolation thermique disposée sous la forme d'une couche parallèle à la surface extérieure du réservoir interne.

15. Cuve étanche et isolante selon la revendication 13 ou 14, dans laquelle l'élément calorifuge est réalisé sous la forme d'une boite (40) comprenant la première plaque (41), la deuxième plaque (42) et des plaques latérales (43) s'étendant entre la première plaque et la deuxième plaque pour enfermer un espace intérieur de la boite, l'espace intérieur de la boite étant remplie de ladite garniture d'isolation thermique.

16. Cuve étanche et isolante selon l'une des revendications 13 à 15, dans laquelle un dit élément calorifuge porte, sur une face externe opposée au réservoir interne, au moins une pièce métallique (46) destinée à fixer la membrane étanche externe sur la barrière isolante, par soudure sur ladite pièce métallique.

17. Cuve étanche et isolante selon l'une des revendications 1 à 16, dans laquelle l'épaisseur de la barrière isolante (5) est comprise entre 200 mm et 800 mm.

18. Cuve étanche et isolante selon l'une des revendications 1 à 17, dans laquelle la surface extérieure (4) du réservoir interne porte une pluralité de coupleurs mécaniques (35, 135), et dans laquelle la barrière isolante (5) est fixée sur la surface extérieure du réservoir interne par lesdits coupleurs mécaniques (35, 135).

19. Cuve étanche et isolante selon la revendication 18, dans laquelle un dit coupleur mécanique (135) comprend une tige (138) traversant la barrière isolante (5) dans le sens de l'épaisseur de la barrière isolante et une pièce d'extrémité (137) qui est fixée à une extrémité de la tige (138) opposée au réservoir interne et qui prend appui sur une surface extérieure de la barrière isolante (5).

20. Cuve étanche et isolante selon la revendication 19, dans laquelle la membrane étanche extérieure (6) est attachée à la pièce d'extrémité (137).

21. Cuve étanche et isolante selon l'une des revendications 1 à 20, dans laquelle l'épaisseur de la membrane étanche extérieure (6) est inférieure à 2 mm.

22. Cuve étanche et isolante selon l'une des revendications 1 à 21, dans laquelle la tôle métallique est en un alliage choisi parmi les aciers non et faiblement alliés, les aciers inoxydables, les alliages d'acier au Nickel à faible coefficient de dilation thermique, et les alliages d'acier au manganèse à faible coefficient de dilation thermique.

23. Cuve étanche et isolante selon l'une des revendications 1 à 22, dans laquelle la membrane étanche extérieure (6) est ondulée et comporte une première série d'ondulations (16) parallèles et des portions situées entre les ondulations parallèles et reposant sur la barrière isolante, les ondulations parallèles étant agencées parallèlement à une première direction.

24. Cuve étanche et isolante selon la revendication 23, dans laquelle la membrane étanche extérieure comporte en outre une deuxième série d'ondulations (17) parallèles et des portions planes situées entre les ondulations parallèles et reposant sur la barrière isolante, les ondulations parallèles étant agencées perpendiculairement à la première direction.

25. Cuve étanche et isolante selon l'une des revendications 23 à 24, dans laquelle la membrane étanche extérieure (6) présente une forme générale sphérique et la première direction est une direction méridienne, ou la membrane étanche extérieure présente une forme générale cylindrique et la première direction est une direction axiale, ou la membrane étanche extérieure présente une forme générale parallélépipédique et la première direction est une direction longitudinale.

26. Cuve étanche et isolante selon l'une des revendications 1 à 25, dans laquelle la membrane étanche extérieure (6) présente une capacité de déformation élastique supérieure à 0,2 %, de préférence comprise entre 0,2 et 1,8%, à température ambiante dans au moins une direction perpendiculaire à l'épaisseur, de préférence dans toute direction perpendiculaire à l'épaisseur.

27. Cuve étanche et isolante selon l'une des revendications 1 à 26, dans laquelle la phase gazeuse en dépression présente une pression absolue inférieure à 1kPa (10 mbar), de préférence 0,1 kPa (1 mbar) à une température de 15 °C.

28. Installation de stockage terrestre comprenant une cuve étanche et isolante selon l'une des revendications 1 à 27.

29. Véhicule terrestre, aérien ou marin, en particulier un navire (70), comportant un dispositif de propulsion ou de production d'énergie et une cuve étanche et isolante (1) selon l'une des revendications 1 à 27 en tant que réservoir de carburant pour le dispositif de propulsion ou de production d'énergie.

30. Utilisation d'une cuve étanche et isolante (1) selon l'une des revendications 1 à 27, pour le stockage et/ou le transport du dihydrogène.

## Patentansprüche

1. Dichter und isolierender Tank (1) zur Speicherung und/oder für den Transport eines Flüssiggases, wobei der Tank nacheinander von innen nach außen umfasst:
einen innenliegenden Behälter (2), der dicht und selbsttragend ist, wobei der innenliegende Behälter eine Innenfläche, die dafür bestimmt ist, mit dem Flüssiggas in Kontakt zu sein, und eine Außenfläche aufweist,
eine isolierende Sperre (5), die die Außenfläche des innenliegenden Behälters abdeckt, wobei die isolierende Sperre an dem innenliegenden Behälter befestigt ist,
eine dichte Außenmembran (6), die eine Außenfläche der isolierenden Sperre abdeckt, wobei die dichte Außenmembran ein Metallblech umfasst,
wobei die dichte Außenmembran an der isolierenden Sperre oder dem innenliegenden Behälter befestigt ist,
**dadurch gekennzeichnet, dass** die dichte Außenmembran mit Balgen oder Wellen (8) versehen ist, um eine elastische Verformung zu ermöglichen, in der ein Zwischenraum, der zwischen dem innenliegenden Behälter und der dichten Außenmembran angeordnet ist, eine Unterdruck-Gasphase enthält, um die dichte Außenmembran (6) gegen die Außenfläche der isolierenden Sperre (5) zu drücken, wobei der Unterdruck aus einer Differenz zwischen dem Druck, der im Zwischenraum herrscht, und dem Luftdruck besteht.

2. Dichter und isolierender Tank nach Anspruch 1, wobei der innenliegende Behälter (2) eine Metallhülle mit einer Dicke von mehr als 10 mm umfasst.

3. Dichter und isolierender Tank nach Anspruch 1 oder 2, wobei der innenliegende Behälter (2) aus Materialien gefertigt ist, die aus Folgendem ausgewählt sind: nicht und niedriglegierte Stähle, Edelstähle, Nickel-Stahllegierungen mit niedrigem Wärmeausdehnungskoeffizient und Mangan-Stahllegierungen mit niedrigem Wärmeausdehnungskoeffizient, Aluminium.

4. Dichter und isolierender Tank nach einem der Ansprüche 1 bis 3, in dem interne Versteifungen (11) an der Innenfläche des innenliegenden Behälters befestigt sind.

5. Dichter und isolierender Tank nach Anspruch 4, wobei die internen Versteifungen (11) hervorspringende Rippen auf der Innenfläche (3) aufweisen.

6. Dichter und isolierender Tank nach einem der Ansprüche 1 bis 5, wobei der innenliegende Behälter (2) dafür ausgelegt ist, einem relativen Innendruck von mehr als 200 kPa zu widerstehen.

7. Dichter und isolierender Tank nach einem der Ansprüche 1 bis 6, wobei der Tank unter anderem ein Stützsystem (50, 51, 60, 160), das dafür ausgelegt ist, den Tank in einer Installation (52, 53) zu stützen, umfasst, wobei das Stützsystem mindestens ein Stützelement (60) umfasst, das einen internen Abschnitt (61, 161) aufweist, der an dem innenliegenden Behälter befestigt ist, und einen externen Abschnitt (63, 163), der an der Außenseite der dichten Außenmembran (6) verläuft, wobei sich das genannte Stützelement (60) durch eine Dicke der isolierenden Sperre (5) erstreckt und auf abdichtende Weise durch die dichte Außenmembran (6) verläuft.

8. Dichter und isolierender Tank nach Anspruch 7, wobei ein genanntes Stützelement (50) an einem unteren Abschnitt des innenliegenden Behälters befestigt ist und wobei der Tank von dem genannten Stützelement getragen wird.

9. Dichter und isolierender Tank nach Anspruch 7, wobei ein genanntes Stützelement (51) an einem oberen Abschnitt des innenliegenden Behälters befestigt ist und wobei der Tank an dem genannten Stützelement hängt.

10. Dichter und isolierender Tank nach einem der Ansprüche 1 bis 9, wobei die isolierende Sperre (5) ein Material umfasst, das aus Folgendem ausgewählt ist: Polymerschaum, Mineralwolle, Polyester- oder Zelluosewatte, Perlite, pyrogenes Siliciumdioxid, verdichtetes Siliciumdioxid und Aerogele.

11. Dichter und isolierender Tank nach einem der Ansprüche 1 bis 10, wobei die isolierende Sperre (5) aus einem Material besteht, das aus Mineralwolle, Polyesterwatte und Zellulosewatte ausgewählt ist.

12. Dichter und isolierender Tank nach einem der Ansprüche 1 bis 11, wobei die isolierende Sperre (5) in Richtung der Dicke zwischen dem innenliegenden Behälter (2) und der dichten Außenmembran (6) vorverdichtet ist.

13. Dichter und isolierender Tank nach einem der Ansprüche 1 bis 12, wobei die isolierende Sperre wärmeisolierende Elemente (20, 40) aufweist, die nebeneinander auf der Außenfläche des innenliegenden Behälters angeordnet sind.

14. Dichter und isolierender Tank nach Anspruch 13, wobei ein wärmeisolierendes Element (40) eine wärmedämmende Auskleidung einschließt, die in Form einer Schicht parallel zur Außenfläche des innenliegenden Behälters angeordnet ist.

15. Dichter und isolierender Tank nach Anspruch 13 oder 14, wobei das wärmeisolierende Element in Form eines Kastens (40) ausgeführt ist, der die erste Platte (41), die zweite Platte (42) und die Seitenplatten (43) umfasst, die sich zwischen der erste Platte und der zweiten Platte erstrecken, um einen Innenraum des Kastens zu umschließen, wobei der Innenraum des Kastens mit der genannten wärmedämmenden Auskleidung gefüllt ist.

16. Dichter und isolierender Tank nach einem der Ansprüche 13 bis 15, wobei ein genanntes wärmeisolierendes Element an einer Außenseite, die dem innenliegenden Behälter gegenüber liegt, mindestens ein Metallstück (46) aufweist, das dafür bestimmt ist, die dichte Außenmembran an der isolierenden Sperre zu befestigen, durch Schweißen an das genannte Metallstück.

17. Dichter und isolierender Tank nach einem der Ansprüche 1 bis 16, wobei die Dicke der isolierenden Sperre (5) zwischen 200 mm und 800 mm liegt.

18. Dichter und isolierender Tank nach einem der Ansprüche 1 bis 17, wobei die Außenfläche (4) des innenliegenden Behälters eine Vielzahl mechanischer Kopplungen (35, 135) aufweist und wobei die isolierende Sperre (5) an der Außenfläche des innenliegenden Behälters über die genannten mechanischen Kopplungen (35, 135) befestigt ist.

19. Dichter und isolierender Tank nach Anspruch 18, wobei eine genannte mechanische Kopplung (135) einen Schaft (138) umfasst, der durch die isolierende Sperre (5) in Richtung der Dicke der isolierenden Sperre verläuft, und ein Endstück (137), das an einem Ende des Schafts (138), dem innenliegenden Behälter gegenüber, an einer Außenfläche der isolierenden Sperre (5) befestigt ist.

20. Dichter und isolierender Tank nach Anspruch 19, wobei die dichte Außenmembran (6) an dem Endstück (137) befestigt ist.

21. Dichter und isolierender Tank nach einem der Ansprüche 1 bis 20, wobei die Dicke der dichten Außenmembran (6) unter 2 mm liegt.

22. Dichter und isolierender Tank nach einem der Ansprüche 1 bis 21, wobei das Metallblech eine Legierung ist, die aus nicht oder niedriglegierten Stählen, Edelstählen, Nickel-Stahllegierungen mit niedrigem Wärmeausdehnungskoeffizient und Mangan-Stahllegierungen mit niedrigem Wärmeausdehnungskoeffizient ausgewählt ist.

23. Dichter und isolierender Tank nach einem der Ansprüche 1 bis 22, wobei die dichte Außenmembran (6) gewellt ist und eine erste Reihe parallel verlaufender Wellen (16) und Abschnitte umfasst, die sich zwischen den parallel verlaufenden Wellen befinden und sich auf die isolierende Sperre stützen, wobei die parallel verlaufenden Wellen in eine erste Richtung parallel angeordnet sind.

24. Dichter und isolierender Tank nach Anspruch 23, wobei die dichte Außenmembran ferner eine zweite Reihe parallel verlaufender Wellen (17) und flache Abschnitte umfasst, die sich zwischen den parallel verlaufenden Wellen befinden und sich auf die isolierende Sperre stützen, wobei die parallel verlaufenden Wellen senkrecht zu der ersten Richtung angeordnet sind.

25. Dichter und isolierender Tank nach einem der Ansprüche 23 bis 24, wobei die dichte Außenmembran (6) eine generell kugelförmige Form aufweist und die erste Richtung eine Meridianrichtung ist, oder wobei die dichte Außenmembran eine generell zylinderförmige Form aufweist und die erste Richtung eine axiale Richtung ist, oder wobei die dichte Außenmembran generell eine Parallelepiped-Form aufweist und die erste Richtung eine Längsrichtung ist.

26. Dichter und isolierender Tank nach einem der Ansprüche 1 bis 25, wobei die dichte Außenmembran (6) eine elastische Verformungsfähigkeit von mehr als 0,2 %, bevorzugt zwischen 0,2 und 1,8 %, bei Umgebungstemperatur in mindestens einer zur Dicke senkrechten Richtung, bevorzugt in jeder zur Dicke senkrechten Richtung, aufweist.

27. Dichter und isolierender Tank nach einem der Ansprüche 1 bis 26, wobei die Unterdruck-Gasphase einen absoluten Druck von unter 1 kPa (10 mbar), bevorzugt 0,1 kPa (1 mbar), bei einer Temperatur von 15 °C aufweist.

28. Speicheranlage an Land, einen dichten und isolierenden Tank nach einem Ansprüche 1 bis 27 umfassend.

29. Land-, Luft oder Wasserfahrzeug, insbesondere ein Schiff (70), eine Antriebs- oder Energieerzeugungsvorrichtung und einen dichten und isolierenden Tank (1) nach einem der Ansprüche 1 bis 27 als Kraftstofftank für die Antriebs- oder Energieerzeugungsvorrichtung umfassend.

30. Verwendung eines dichten und isolierenden Tanks (1) nach einem der Ansprüche 1 bis 27 für die Speicherung und/oder den Transport von Wasserstoff.

## Claims

1. A sealed and insulating tank (1) for storing and/or transporting a liquefied gas, the tank comprising successively, from the inside to the outside:
an internal reservoir (2), which is sealed and self-supporting, the internal reservoir having an inner surface intended to be in contact with the liquefied gas, and an outer surface,
an insulating barrier (5) covering the outer surface of the internal reservoir, the insulating barrier being attached to the internal reservoir,
an outer sealed membrane (6) covering an outer surface of the insulating barrier, the outer sealed membrane comprising a piece of sheet metal the outer sealed membrane being attached to the insulating barrier or the internal reservoir, **characterized in that** the outer sealed membrane is provided with bellows or corrugations (8) so as to allow elastic deformation,
wherein an intermediate space located between the internal reservoir and the outer sealed membrane contains a gas phase under depression in order to press the outer sealed membrane (6) against the outer surface of the insulating barrier (5), wherein the depression consists of a difference between the pressure prevailing inside the intermediate space and the atmospheric pressure.

2. The sealed and insulating tank as claimed in claim 1, wherein the internal reservoir (2) comprises a metal shell having a thickness greater than 10 mm.

3. The sealed and insulating tank as claimed in claim 1 or 2, wherein the internal reservoir (2) is manufactured from materials chosen from: non- and low-alloy steels, stainless steels, steel alloys containing nickel with a low coefficient of thermal expansion, and steel alloys containing manganese with a low coefficient of thermal expansion, aluminum.

4. The sealed and insulating tank as claimed in one of claims 1 to 3, wherein internal stiffeners (11) are attached to the inner surface of the internal reservoir.

5. The sealed and insulating tank as claimed in claim 4, wherein the internal stiffeners (11) include protruding ribs on the inner surface (3).

6. The sealed and insulating tank as claimed in one of claims 1 to 5, wherein the internal reservoir (2) is dimensioned to withstand a relative internal pressure greater than 200 kPa.

7. The sealed and insulating tank as claimed in one of claims 1 to 6, the tank further comprising a support system (50, 51, 60, 160) intended to support the tank in an installation (52, 53), the support system comprising at least one support element (60) having an internal portion (61, 161) attached to the internal reservoir and an external portion (63, 163) extending outside the outer sealed membrane (6), said support element (60) extending through a thickness of the insulating barrier (5) and passing sealingly through the outer sealed membrane (6).

8. The sealed and insulating tank as claimed in claim 7, wherein a said support element (50) is attached to a lower portion of the internal reservoir, and wherein the tank is borne by said support element.

9. The sealed and insulating tank as claimed in claim 7, wherein a said support element (51) is attached to an upper portion of the internal reservoir, and wherein the tank is suspended by said support element.

10. The sealed and insulating tank as claimed in one of claims 1 to 9, wherein the insulating barrier (5) comprises a material chosen from: polymer foam, mineral wool, polyester or cellulose wadding, perlite, fumed silica, compacted silica and aerogels.

11. The sealed and insulating tank as claimed in one of claims 1 to 10, wherein the insulating barrier (5) is made of a material chosen from mineral wool, polyester wadding and cellulose wadding.

12. The sealed and insulating tank as claimed in one of claims 1 to 11, wherein the insulating barrier (5) is pre-compressed in the thickness direction between the internal reservoir (2) and the outer sealed membrane (6).

13. The sealed and insulating tank as claimed in one of claims 1 to 12, wherein the insulating barrier comprises heat-insulating elements (20, 40) juxtaposed on the outer surface of the internal reservoir.

14. The sealed and insulating tank as claimed in claim 13, wherein a heat-insulating element (40) includes a thermal insulation lining arranged in the form of a layer parallel to the outer surface of the internal reservoir.

15. The sealed and insulating tank as claimed in claim 13 or 14, wherein the heat-insulating element is produced in the form of a box (40) comprising the first plate (41), the second plate (42) and side plates (43) extending between the first plate and the second plate to enclose an interior space of the box, the interior space of the box being filled with said thermal insulation lining.

16. The sealed and insulating tank as claimed in one of claims 13 to 15, wherein a said heat-insulating element carries, on an outer face opposite the internal reservoir, at least one metal part (46) intended to attach the outer sealed membrane on the insulating barrier, by welding on said metal part.

17. The sealed and insulating tank as claimed in one of claims 1 to 16, wherein the thickness of the insulating barrier (5) is between 200 mm and 800 mm.

18. The sealed and insulating tank as claimed in one of claims 1 to 17, wherein the outer surface (4) of the internal reservoir bears a plurality of mechanical couplers (35, 135), and wherein the insulating barrier (5) is attached to the outer surface of the internal reservoir by said mechanical couplers (35, 135).

19. The sealed and insulating tank as claimed in claim 18, wherein a said mechanical coupler (135) comprises a rod (138) passing through the insulating barrier (5) in the thickness direction of the insulating barrier and an end piece (137) which is attached to one end of the rod (138) opposite the internal reservoir and which bears on an outer surface of the insulating barrier (5).

20. The sealed and insulating tank as claimed in claim 19, wherein the outer sealed membrane (6) is attached to the end piece (137).

21. The sealed and insulating tank as claimed in one of claims 1 to 20, wherein the thickness of the outer sealed membrane (6) is less than 2 mm.

22. The sealed and insulating tank as claimed in one of claims 1 to 21, wherein the sheet metal is made of an alloy chosen from non- and low-alloy steels, stainless steels, steel alloys containing nickel with a low coefficient of thermal expansion, and steel alloys containing manganese with a low coefficient of thermal expansion.

23. The sealed and insulating tank as claimed in one of claims 1 to 22, wherein the outer sealed membrane (6) is corrugated and comprises a first series of parallel corrugations (16) and portions located between the parallel corrugations and resting on the insulating barrier, the parallel corrugations being arranged parallel to a first direction.

24. The sealed and insulating tank as claimed in claim 23, wherein the outer sealed membrane further comprises a second series of parallel corrugations (17) and flat portions located between the parallel corrugations and resting on the insulating barrier, the parallel corrugations being arranged perpendicular to the first direction.

25. The sealed and insulating tank as claimed in one of claims 23 to 24, wherein the outer sealed membrane (6) has a generally spherical shape and the first direction is a meridian direction, or the outer sealed membrane has a generally cylindrical shape and the first direction is an axial direction, or the outer sealed membrane has a generally parallelepiped shape and the first direction is a longitudinal direction.

26. The sealed and insulating tank as claimed in one of claims 1 to 25, wherein the outer sealed membrane (6) has a capacity for elastic deformation of greater than 0.2%, preferably between 0.2 and 1.8% at ambient temperature in at least one direction perpendicular to the thickness, preferably in any direction perpendicular to the thickness.

27. The sealed and insulating tank as claimed in one of claims 1 to 26, wherein the gas phase under depression has an absolute pressure of less than 1 kPa (10 mbar), preferably 0.1 kPa (1 mbar) at a temperature of 15°C.

28. An onshore storage facility comprising a sealed and insulating tank as claimed in one of claims 1 to 27.

29. A land, air or marine vehicle, in particular a carrier (70), comprising a propulsion or energy production device and a sealed and insulating tank (1) as claimed in one of claims 1 to 27 as a fuel reservoir for the propulsion or energy production device.

30. A use of a sealed and insulating tank (1) as claimed in one of claims 1 to 27, for storing and/or transporting dihydrogen.
